# EUROPÄISCHE PATENTSCHRIFT

(11) **EP 1 956 240 B1**
(45) Veröffentlichungstag und Bekanntmachung des Hinweises auf die Patenterteilung: **02.12.2009**
(21) Anmeldenummer: 08001088.7
(22) Anmeldetag: 22.01.2008
(51) Int. Cl.: F04B 39/00, F04B 53/14, F16J 1/18, F16J 1/14, F01M 1/06

(54) **Kurbeltrieb für einen Kolbenverdichter**
Crank drive for a piston compressor
Commande à manivelle pour un compresseur à piston

(30) Priorität: 06.02.2007 DE 102007006641
(43) Veröffentlichungstag der Anmeldung: 13.08.2008
(73) Patentinhaber: Voith Patent GmbH, 89522 Heidenheim (DE)
(72) Erfinder: Nickl, Jörg, Dr., 01744 Malter (DE)
(74) Vertreter: Dr. Weitzel & Partner

(56) Entgegenhaltungen:
- EP-A- 0 162 833
- EP-A- 0 546 301
- EP-A- 0 646 701
- CH-A- 301 899
- DE-U- 1 976 856
- US-A- 2 192 782
- US-A- 3 495 685
- US-A- 3 785 459
- US-A- 5 174 249

## Beschreibung

Die Erfindung betrifft einen Kurbeltrieb für einen Kolbenverdichter. Die wichtigsten Bestandteile eines solchen Kurbeltriebes sind ein Tauchkolben, der sich in einem Zylinder hin und her bewegt und einen Kolbenbolzen aufweist, eine Kurbelwelle sowie eine Pleuelstange, die eine Triebverbindung zwischen dem Kolben und der Kurbelwelle herstellt, und die ein Bolzenlager zum Lagern des Kolbenbolzens sowie ein Hublager auf der Kurbelwelle aufweist. Auf EP 1 650 434 A2 sowie auf EP 1 703 125 A2 wird verwiesen.

Kolbenverdichter werden unter anderem in Kraftfahrzeugen eingesetzt, bei denen Druckluft zum Ausführen verschiedener Funktionen benötigt wird, zum Beispiel zum Bremsen. Die Anforderungen an die Zuverlässigkeit des Verdichters und insbesondere seines Kurbeltriebes sind daher hoch.

Eine neuralgische Stelle ist die Verbindung zwischen der Pleuelstange des Kurbeltriebes und des Kolbens. Es hat sich nämlich gezeigt, dass das Bolzenlager nur eine begrenzte Lebensdauer hat. Dies gilt insbesondere für zwei- oder mehrstufige Kolbenverdichter, und dort wiederum für den Kurbeltrieb der zweiten Stufe.

EP-A-0 646 701 beschreibt einen Kurbeltrieb mit einem Tauchkolben und einem Kolbenbolzen gemäß dem Oberbegriff des Patentanspruchs 1. Das Bolzenlager ist hierbei ein Wälzlager.

CH 301 899 A beschreibt ebenfalls einen Kurbeltrieb mit einem Wälzlager. Dabei wird das Wälzlager mit Hilfe eines Ölnebels aus dem Kurbelwellenraum geschmiert.

Bei allen bisher bekannten Vorrichtungen besteht nach wie vor das Problem der Lebensdauer des Bolzenlagers. Diese ist unbefriedigend.

Der Erfindung liegt die Aufgabe zugrunde, Maßnahmen anzugeben, mit denen die Lebensdauer des Kurbeltriebes, insbesondere des Bolzenlagers, gesteigert werden kann.

Diese Aufgabe wird durch die Merkmale von Anspruch 1 gelöst. Demgemäß wird bei einem Kurbeltrieb gemäß dem Oberbegriff von Anspruch 1 als Bolzenlager ein Wälzlager vorgesehen, und als Hublager ein Gleitlager.

Der Erfinder hat die zugrundeliegende Problematik konventioneller Kolbenverdichter, insbesondere Bremsluftverdichter wie folgt erkannt:

Bei zwei- oder mehrstufigen Bremsluftverdichtern wird der zweiten Stufe oder einer anderen Folgestufe Luft zugeführt, die bereits unter einem höheren Druck steht, als die der ersten Stufe. In jedem Falle ist der Saugdruck der zweiten Stufe oder der Folgestufe höher, als der Druck im Kurbelraum. Auf der Arbeitsfläche des Tauchkolbens lastet somit ein höherer Druck, als auf jener Seite des Kolbens, die von dessen Arbeitsfläche abgewandt ist. Diese Verhältnisse herrschen bei einem zwei- oder mehrstufigen Kolbenverdichter in jeder Betriebsphase und zu jedem Zeitpunkt. Die auf den Tauchkolben und alle nachgeschalteten Bauteile wirkende Druckkraft wirkt somit während jeder Betriebsphase und zu jedem Zeitpunkt stets in ein- und derselben Richtung, somit von der Arbeitsfläche ausgehend in Richtung auf die Pleuelstange und weiter auf die Kurbelwelle. Eine Lastumkehr findet nicht statt, da die oszillierende Massenkraft klein i. V. zur Druckkraft ist.

Dies hat die folgende Konsequenz:

Konventionelle Kurbeltriebe verwenden nur Gleitlager. Dies gilt für das Bolzenlager, wie auch für das Hublager. Aufgrund der genannten Lastwirkung trägt stets nur jener Bereich des Bolzenlagers, welcher der Arbeitsfläche des Tauchkolbens abgewandt ist. Entsprechend wird auch der Kolbenbolzen belastet, das heißt ebenfalls nur auf jenem Bereich seiner Umfangsfläche, der der Arbeitsfläche des Tauchkolbens abgewandt ist. Dies bedeutet, dass die Umfangsfläche des Kolbenbolzens in dem genannten Bereich zu jedem Zeitpunkt an die Lagerfläche angepresst ist, so dass Schmieröl keinerlei Chance hat, diesen Bereich zu erfassen. Dies gilt besonders um so mehr, als der Kolbenbolzen in diesem tragenden Bereich so gut wie keine Relativbewegung zur Lagerbohrung der Pleuelstange ausführt - ganz im Gegensatz zum Hublager - das mit der Winkelgeschwindigkeit der Kurbelwelle rotiert.

Die genannte Erscheinung führt zu einem frühzeitigen Ausfall des Bolzenlagers.

Ist eine Lastumkehr vorhanden, so kann das Schmieröl durch die Spielverlagerung zwischen Kolbenbolzen und Pleuelstange periodisch an die tragenden Bereiche gelangen.

Das erfindungsgemäße Wälzlager löst das Problem mit dem fehlenden Lastwechsel grundsätzlich. Während des Betriebes führen die Wälzkörper eine wenn auch minimale Rotation um die eigene Längsachse aus. Der im Kurbelwellenraum vorhandene Ölnebel reicht im allgemeinen zur Schmierung des Wälzlagers aus. Es sollten nur Vorkehrungen getroffen werden, damit der Ölnebel aus dem Kurbelwellenraum von der Seite her in das Lager eindringen kann.

Die Erfindung ist anhand der Zeichnung näher erläutert. Darin ist im einzelnen folgendes dargestellt:

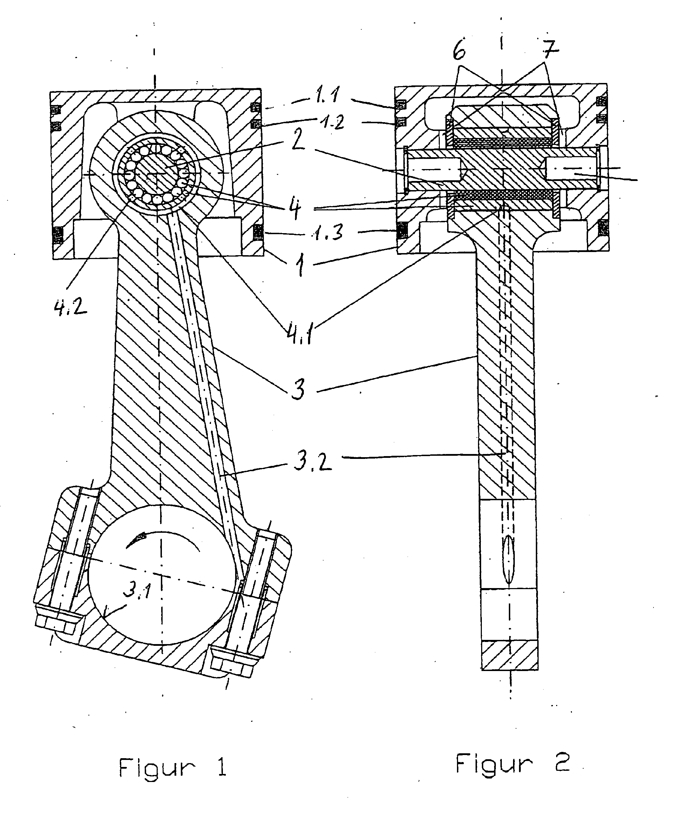

- Figur 1: zeigt einen Kurbeltrieb für einen zweistufigen Kolbenverdichter in einer Schnittansicht, gelegt in einer zur Kurbelwellenachse senkrechten Schnittebene.
- Figur 2: zeigt den Gegenstand von Figur 1 in einer um 90 Grad verdrehten Schnittansicht.

Der Kurbeltrieb umfasst einen Tauchkolben 1. Dieser weist einen Kolbenbolzen 2 auf.

Eine Pleuelstange 3 greift einerseits am Kolbenbolzen 2 an, andererseits an einer hier nicht dargestellten Kurbelwelle.

Gemäß der Erfindung ist das Bolzenlager 4 ein als Nadellager ausgeführtres spezielles Wälzlager. Das Nadellager kann in üblicher Weise einen Käfig aufweisen. Jedoch kann im Hinblick auf den relativ geringen Schwenkwinkel der Pleuelstange 3 auch auf den Käfig verzichtet werden. Hierdurch lässt sich die Anzahl der Nadeln und damit die Tragfähigkeit des Nadellagers 4 erhöhen.

Um ein Verkanten der Nadeln zu verhindern, sollte das Verhältnis zwischen Nadeldurchmesser und Kolbenbolzendurchmesser derart gewählt werden, dass ein Minimum an Spiel zwischen den Nadeln herrscht.

Die Pleuelstange 3 besitzt an ihrem unteren Ende, das an der Kurbelwelle angreift, ein ölgeschmiertes Gleitlager 3.1.

Dem Tauchkolben 1 sind zwei Deckscheiben 6; 6 zugeordnet, die das Nadellager 4 zwischen sich einschließen. Zwischen den Deckscheiben 6; 6 und dem Kolbenbolzen 2 ist ein Radialspiel vorgesehen. Zusätzlich sind auch Nuten 7; 7 im Kolben 1 vorgesehen werden, damit Ölnebel aus dem Kurbelwellenraum in das Nadellager 4 eindringen kann.

Im vorliegenden Falle ist die Pleuelstange 3 von einer Längsbohrung 3.2 durchzogen. Außerdem ist die Buchse des Nadellagers 4 mit einer Umfangsrille 4.1 sowie mit einer Radialbohrung 4.2 versehen. Die Längsbohrung 3.2 stellt eine leitende Verbindung zwischen dem Hublager 3.1 und dem Nadellager 4 her, so dass Öl zum Nadellager 4 gelangt. Dabei ist die Längsbohrung 3.2 der Pleuelstange derart anzuordnen, dass sich ihr Einlass - in Drehrichtung des Kurbelzapfens gesehen - weit vor der Stelle des höchsten Schmierölfilmdruckes befindet (mindestens ca. 60 Grad), wobei sich dort bereits ein kleiner Überdruck gebildet hat, so dass Öl in die Längsbohrung 3.2 gedrückt wird.

Diese zusätzliche Ölversorgung durch die Längsbohrung 3.2 ist jedoch nicht zwingend notwendig.

Um den Kolbenbolzen in seinem tragenden Bereich zu versteifen, besitzt er nur zwei äußere Sackbohrungen 2.1, 2.2. Er kann in vielen Fällen wie üblich auch eine durchgehende Bohrung zur Massereduzierung besitzen.

Wie üblich, weist der Kolben 1 Kolbenringe 1.1, 1.2, 1.3 auf.

Die Erfindung lässt sich immer dann anwenden, wenn bei einem Pleueltrieb keine Umkehr der Kraftwirkungsrichtung stattfindet.

### Bezugszeichenliste

- 1: Tauchkolben
- 1.1: Kolbenring
- 1.2: Kolbenring
- 1.3: Kolbenring
- 2: Kolbenbolzen
- 2.1: Sackbohrung
- 2.2: Sackbohrung
- 3: Pleuelstange
- 3.1: Gleitlager
- 3.2: Längsbohrung
- 4: Nadellager
- 4.1: Umfangsrille
- 4.2: Radialbohrung
- 6: Deckscheibe
- 7: Nut

## Patentansprüche

1. Kurbeltrieb für einen Verdichter
1.1 mit einem Tauchkolben (1), der einen Kolbenbolzen (2) umfasst;
1.2 mit einer in einem Kurbelwellenraum angeordneten Kurbelwelle umfassend einen Kurbelzapfen;
1.3 mit einer Pleuelstange (3), die eine Triebverbindung zwischen dem Tauchkolben (1) und der Kurbelwelle herstellt und die ein Bolzenlager (4) zum Lagern des Kolbenbolzens (2) sowie ein Hublager (3.1) zum Lagern des Kurbelzapfens aufweist;
1.4 das Bolzenlager (4) ist ein Wälzlager;
1.5 das Hublager (3.1) ist ein ölgeschmiertes Gleitlager; **gekennzeichnet durch** die folgenden Merkmale:
1.6 zur Schmierung des Wälzlagers ist eine leitende Verbindung zwischen dem Kurbelwellenraum und dem Wälzlager vorgesehen, wobei die Verbindung Nuten (7) im Tauchkolben (1) und Deckscheiben (6) am Kolbenbolzen (2) mit Radialspiel umfasst und den Zutritt von Ölnebel aus dem Kurbelwellenraum ermöglicht;
1.7 das Wälzlager ist ein Nadellager oder eine Nadelhülse oder ein Nadelkranz;
1.8 die Buchse des Wälzlagers weist eine Umfangsrille (4.1) sowie eine Radialbohrung (4.2) auf.

2. Kurbeltrieb nach Anspruch 1,
**gekennzeichnet durch** die folgenden Merkmale:
2.1 zur Schmierung des Wälzlagers ist eine leitenden Verbindung zwischen Kurbelwellenraum und dem Wälzlager vorgesehen;
2.2 die Verbindung umfasst eine Längsbohrung (3.2) in der Pleuelstange (3).

3. Kurbeltrieb nach einem der Ansprüche 1 oder 2, **dadurch gekennzeichnet, dass** das Wälzlager (4) ein käfigloses, vollnadeliges Lager ist.

4. Kurbeltrieb nach einem der Ansprüche 1 bis 3, **dadurch gekennzeichnet, dass** der Kolbenbolzen (2) drehbar im Tauchkolben (1) mittels beidseitig zur Pleuelstange (3) befindlichen Wälzlagern gelagert ist.

5. Kurbeltrieb nach einem der Ansprüche 1 oder 2, **dadurch gekennzeichnet, dass** das Wälzlager ein Nadelkranz ist.

## Claims

1. A crank mechanism for a compressor;
1.1 with a plunger (1) which comprises a piston pin (2);
1.2 with a crankshaft which is arranged in a crankshaft space and comprises a crankpin;
1.3 with a connecting rod (3) which produces a drive connection between the plunger (1) and the crankshaft and which comprises a pin bearing (4) for bearing the piston pin (2) and a crankpin bearing (3.1) for bearing the crankpin;
1.4 the pin bearing (4) is a roller bearing;
1.5 the crankpin bearing (3.1) is an oil-lubricated slide bearing; **characterized by** the following measures:
1.6 a conductive connection between the crankshaft space and the roller bearing is provided for lubricating the roller bearing, with the connection comprising grooves (7) in the plunger (1) and cover disks (6) on the piston pin (2) with radial play and enabling access of oil mist from the crankshaft space;
1.7 the roller bearing is a needle bearing or a needle sleeve or a needle race;
1.8 the bush of the roller bearing comprises a circumferential groove (4.1) and a radial bore hole (4.2).

2. A crank mechanism according to claim 1, **characterized by** the following features:
2.1 a conductive connection is provided between the crankshaft space and the roller bearing for lubricating the roller bearing;
2.2 the connection comprises a longitudinal bore (3.2) in the connecting rod (3).

3. A crank mechanism according to one of the claims 1 or 2, **characterized in that** the roller bearing (4) is a cage-free full-needle bearing.

4. A crank mechanism according to one of the claims 1 to 3, **characterized in that** the piston pin (2) is held in rotatable manner in the plunger (1) by means of roller bearings disposed on both sides in relation to the connecting rod (3).

5. A crank mechanism according to one of the claims 1 or 2, **characterized in that** the roller bearing is a needle race.

## Revendications

1. Entraînement à manivelle pour un compresseur
1.1 avec un piston plongeur (1) comprenant un boulon de piston (2) ;
1.2 avec une vilebrequin disposé dans un carter de vilebrequin et comprenant un maneton de vilebrequin ;
1.3 avec une bielle (3) qui crée une liaison motrice entre le piston plongeur (1) et le vilebrequin et présente un palier à boulon (4) pour l'appui du boulon de piston (2) ainsi qu'un palier de levage (3.1) pour l'appui du maneton de vilebrequin ;
1.4 le palier à boulon (4) est un roulement à rouleaux ;
1.5 le palier de levage (3.1) est un palier de glissement lubrifié à l'huile ;
**caractérisé en ce que** :
1.6 il est prévu pour lubrifier le roulement à rouleaux une communication conductrice entre le carter de vilebrequin et le roulement à rouleaux, laquelle communication comprend des gorges (7) dans le piston plongeur (1) et des rondelles de couverture (6) sur le boulon de piston (2) avec un jeu radial et permet l'accès de brouillard d'huile hors du carter de vilebrequin ;
1.7 le roulement à rouleaux est un roulement à aiguilles ou une douille à aiguilles ou une cage à aiguilles ;
1.8 la douille du roulement à rouleaux présente une rainure circonférentielle (4.1) et un alésage radial (4.2).

2. Entraînement à manivelle selon la revendication 1, **caractérisé en ce que** :
2.1 il est prévu pour lubrifier le roulement à rouleaux une communication conductrice entre le carter de vilebrequin et le roulement à rouleaux ;
2.2 la communication comprend un alésage longitudinal (3.2) dans la bielle (3).

3. Entraînement à manivelle selon l'une des revendications 1 ou 2, **caractérisé en ce que** le roulement à rouleaux (4) est un roulement à aiguilles pleines sans cage.

4. Entraînement à manivelle selon l'une des revendications 1 à 3, **caractérisé en ce que** le boulon de piston (2) est supporté avec possibilité de rotation dans le piston plongeur (1) au moyen de roulements à rouleaux qui se trouvent de part et d'autre de la bielle (3).

5. Entraînement à manivelle selon l'une des revendications 1 ou 2, **caractérisé en ce que** le roulement à rouleaux est une cage à aiguilles.
